# EUROPÄISCHE PATENTSCHRIFT

(11) **EP 0 852 894 B1**
(45) Veröffentlichungstag und Bekanntmachung des Hinweises auf die Patenterteilung: **14.06.2000**
(21) Anmeldenummer: 96919633.6
(22) Anmeldetag: 07.06.1996
(51) Int. Cl.: H05B 41/285

(54) **THERMISCH GESCHÜTZTES, ELEKTRISCHE BAUELEMENTE ENTHALTENDES STEUERGERÄT**
THERMALLY-PROTECTED CONTROL APPARATUS CONTAINING ELECTRICAL COMPONENTS
DISPOSITIF DE COMMANDE PROTEGE THERMIQUEMENT CONTENANT DES COMPOSANTS ELECTRIQUES

(30) Priorität: 20.09.1995 DE 19534865; 28.09.1995 DE 19536142
(43) Veröffentlichungstag der Anmeldung: 15.07.1998
(73) Patentinhaber: ROBERT BOSCH GMBH, 70442 Stuttgart (DE)
(72) Erfinder: BORHO, Lothar, D-77731 Willstätt (DE); ECKERT, Klaus, D-77770 Durbach (DE); KERN, Robert, D-77887 Sasbachwalden (DE)
(86) Internationale Anmeldenummer: DE9600998
(87) Internationale Veröffentlichungsnummer: WO9711582

(56) Entgegenhaltungen:
- EP-A- 0 534 793
- DE-A- 3 516 989
- FR-A- 2 062 554

## Beschreibung

### Stand der Technik

Die Erfindung geht aus von einem thermisch geschütztem, elektrische Bauelemente enthaltendem Steuergerät, insbesondere für die Steuerung von Hochdruck-Gasentladungslampen in Kraftfahrzeugscheinwerfern, der im Oberbegriff des Anspruchs 1 definierten Gattung.

Der Schutz von elektrische Leistung abgebenden Endstufen gegen Übertemperatur ist allgemein bekannt. Dabei wird üblicherweise ein Steuergerät, welches elektrische Bauelemente in einem im wesentlichen geschlossenen Gehäuse enthält, dann völlig abgeschaltet, wenn die kritische Temperatur überschritten ist. Dies hat allerdings zur Folge, daß das Steuergerät in diesem Zustand seine Funktion nicht erfüllen kann. Wird ein solches Steuergerät beispielsweise für den Betrieb einer Lampe im Scheinwerfer eines Kraftfahrzeuges eingesetzt, dann kann dies zu fatalen Folgen führen.

Aus der EP-A-0 534 793 ist ein Notbeleuchtungsgerät mit einer Leuchtstofflampe, zugehörigem elektronischem Vorschaltgerät, einem Frequenzwandler zur Versorgung der Lampe mit einer Batterie, sowie einem Steuergerät für den Betrieb der Lampe mit Hochfrequenz und zum Laden der Batterie aus einer Hauptstromversorgung bekannt. Sämtliche Bauteile sind vorzugsweise in einem einzigen Leuchtkörper vereinigt. Durch Temperatursensoren an Lampe und Batterie sowie zugehörige Rückmeldemittel wird die im Gerät erzeugte Wärme begrenzt. Dazu wird anhand der von den Temperatursensoren an Lampe und Batterie ermittelten Signale derart auf die Leistungsversorgungseinrichtung der Lampe und der Batterie eingewirkt, daß durch geringere abgegebene Leistung die Wärmeabgabe gesenkt wird, um sowohl die Leuchtstofflampe als auch die Batterie vor schädlicher Übertemperatur zu schützen. In diesem Dokument wird die besondere Ausgestaltung des Notbeleuchtungsgeräts im Hinblick auf optimale Einhaltung der für Lampe, Batterie und andere Bauteile erträglichen Temperatur beschrieben. Dabei ist auch immer die von der Lampe, dem Hauptverbraucher, erzeugte Wärme mit dabei als zu berücksichtigende Wärmequelle. Im Gegensatz dazu betrifft der Gegenstand der vorliegenden Anmeldung dagegen ein Steuergerät, bei dem alle seine wesentlichen Bauteile, bis auf den mit Energie zu versorgenden Verbraucher, thermisch geschützt in einem geschlossenen Gehäuse enthalten sind. Entscheidender Unterschied ist also, daß der Verbraucher, insbesondere eine Hochdruck-Gasentladungslampe, nicht im Gehäuse enthalten ist.

Aus der FR-A 2 062 554 ist eine Steuerung für einen aus einer Batterie gespeisten elektrischen Motor in einem Elektrofahrzeug bekannt. Die Steuerung enthält einen impulsgesteuerten Converter mit Thyristor. Um eine Übertemperatur am Motor oder am Thyristor zu vermeiden, wird ein entsprechendes Signal neben dem normalen, die Geschwindigkeit des Motors bestimmenden Signal eingeführt, um die Motorleistung zu begrenzen. Aus diesem Dokument geht nicht hervor, daß das Steuergerät in einem im wesentlichen geschlossenen Gehäuse thermisch geschützt untergebracht ist. Die besondere Problematik eines sich überhitzenden Gehäuses ist hier nicht angesprochen und nicht angedeutet.

### Vorteile der Erfindung

Das erfindungsgemäße thermisch geschützte, elektrische Bauelemente enthaltende Steuergerät, insbesondere für die Steuerung von Hochdruck-Gasentladungslampen in Kraftfahrzeugscheinwerfern, mit den kennzeichnenden Merkmalen des Anspruchs 1, hat demgegenüber den Vorteil der Betriebssicherheit auch dann, wenn unzulässige Abweichungen der Temperatur, insbesondere Übertemperatur, auftreten, weil trotz thermischem Schutz des Gerätes das System funktionsfähig ist bzw. bleibt.

Gemäß der Erfindung wird dies prinzipiell dadurch erzielt, daß die Temperatur des Steuergeräts von einem Temperatursensor erfaßt wird und daß ein Regel- oder Steuerkreis vorgesehen ist, der in Abhängigkeit der festgestellten Temperatur die elektrische Abgabeleistung des Steuergerätes zur Stabilisierung der Innentemperatur im Steuergerät verändert, insbesondere vermindert, wobei der Regelkreis oder der Steuerkreis die Veränderung, insbesondere die Verringerung der Abgabeleistung, nur so weit regelt, daß der zulässige Unterschied zwischen maximal zulässiger Außentemperatur der Bauelemente und maximal zulässiger Außentemperatur des Steuergerätes optimal ausgenutzt ist.

Durch die in den weiteren Ansprüchen niedergelegten Maßnahmen sind vorteilhafte Weiterbildungen und Verbesserungen des im Anspruch 1 angegebenen Steuergeräts möglich.

Gemäß einer bevorzugten Ausführungsform der Erfindung wird die Temperatur innerhalb des Gehäuses von dem Temperatursensor erfaßt. Dadurch ist eine sehr gute Aktualität gegeben.

Gemäß einer anderen Ausführungsform der Erfindung, die besonders dann zweckmäßig ist, wenn im Inneren des Gehäuses keine Möglichkeit zur Temperaturerfassung gegeben ist, sieht vor, daß die Temperatur an dem Gehäuse außen von dem Temperatursensor erfaßt wird und auf die Innentemperatur mittels eines Zuschlags bei der Auswertung geschlossen wird.

Gemäß einer vorteilhaften Ausgestaltung der Erfindung wird die Veränderung der elektrischen Abgabeleistung des Steuergerätes durch den Regelkreis oder den Steuerkreis kontinuierlich vorgenommen. Dadurch ist die Änderung der Abgabeleistung, insbesondere bei einer Verminderung, oft kaum oder überhaupt nicht wahrnehmbar. Dies ist von besonderem Vorteil beim Einsatz des Steuergerätes zur Versorgung einer Hochdruck-Gasentladungslampe in Kraftfahrzeugscheinwerfern, da dann die daraus resultierende Lichtveränderung, insbesondere die Lichtverminderung, optisch und subjektiv kaum merkbar ist.

Entsprechend einer besonders zweckmäßigen Ausgestaltung der Erfindung ist der Temperatursensor in der Nähe des thermisch empfindlichsten Bauelementes innerhalb des Steuergerätes angeordnet. Dadurch kann ein sehr effektiver Schutz sichergestellt werden.

In weiterer vorteilhafter Ausgestaltung der Erfindung berücksichtigt der Regel- oder Steuerkreis die thermische Verlustleistung, die über das Gehäuse des Steuergerätes abgebbar ist, bei der Veränderung der elektrischen Abgabeleistung.

### Zeichnung

Die Erfindung ist anhand eines in der Zeichnung dargestellten Ausführungsbeispiels in der nachfolgenden Beschreibung näher erläutert. Es zeigen:
- Fig. 1: schematisch in einem Balkendiagramm Leistung und Temperatur eines Steuergerätes für zwei verschiedene Fälle, einmal den unzulässigen Fall der Übertemperatur und zum anderen den gemäß der Erfindung geregelten Fall der optimalen Ausnutzung der möglichen Grenze, und
- Fig. 2: schematisch in einem Blockdiagramm die Erfindung anhand eines erfindungsgemäß gestalteten Regelkreises zur Veränderung der Abgabeleistung.

### Beschreibung des Ausführungsbeispiels

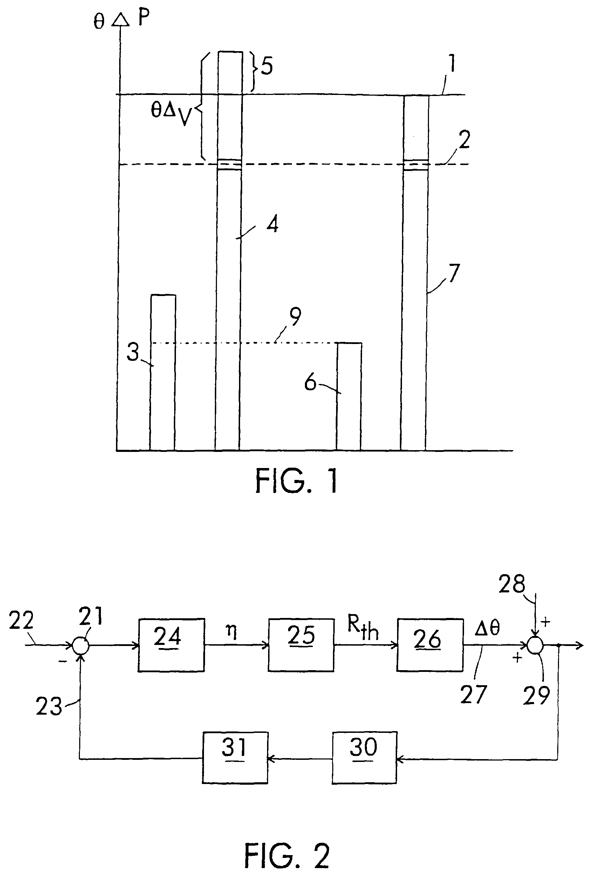

In Fig. 1 ist schematisch in einem Balkendiagramm die Leistung P und die Temperatur θ eines Steuergerätes für zwei verschiedene Fälle dargestellt. In der linken Hälfte von Fig. 1 ist zum einen der unzulässige Fall der Übertemperatur und in der rechten Hälfte zum anderen der gemäß der Erfindung geregelte Fall der optimalen Ausnutzung der möglichen Grenze, gezeigt. Im Diagramm gemäß Fig. 1 ist mit der durchgezogenen Linie 1 die maximal zulässige Temperatur der Bauelemente bezeichnet, die in dem Steuergerät enthalten sind. Das Steuergerät selbst und sein im wesentlichen geschlossenes Gehäuse, welches die Bauelement enthält, und in dem eine bestimmte, schwankende Temperatur vorliegt, sind in den Figuren nicht dargestellt. Die gestrichelte Linie 2 in Fig. 1 gibt die Außentemperatur des Steuergeräts an, wobei auch hier von einer maximal möglichen bzw. zulässigen ausgegangen wird.

Mit dem Balken 3 in Fig. 3 ist die für den ersten Fall angenommene Leistung P_{AbNenn} dargestellt, welche die vom Steuergerät abgegebene Nennleistung bezeichnet. Sie kann bei dem bevorzugten Einsatzgebiet, der Verwendung für die Steuerung von Hochdruck-Gasentladungslampen in Kraftfahrzeugscheinwerfern beispielsweise 35 W betragen. Dieser Leistung P_{AbNenn} entspricht aufgrund des Wirkungsgrades η und des thermischen Widerstandes Rₜₕ die Temperatur, welche mit dem Balken 4 dargestellt ist. Mit Δθ_{V} ist derjenige Temperaturanteil bezeichnet, welcher die mit 2 bezeichnete Außentemperatur des Steuergerätes übersteigt. Diese Verlusttemperaturdifferenz Δθ_{V} übersteigt mit dem Bereich 5 die maximal zulässige, mit 1 bezeichnete Bauelementeaußentemperatur. Daher ist dieser Fall nicht zulässig, weil er zur Zerstörung des Steuergerätes führt.

In der rechten Hälfte von Fig. 1 ist mit dem Balken 6 die gemäß der Erfindung veränderte abgegebene Leistung P_{AbReduz} dargestellt. Mit dem Balken 7 ist die zugehörige Temperatur gezeigt, welche gerade bis zur Linie 1, der maximal zulässigen Außentemperatur der Bauelemente, reicht. Der zwischen den Linien 1 und 2 gegebene Temperaturbereich ist damit zum Abbau der zugehörigen, aufgrund der relevanten Verlustleistung entstehenden, mit 8 bezeichneten Temperaturdifferenz optimal ausgenutzt. Die gestrichelte Linie 9 gibt die Beziehung an zwischen der nicht zulässigen Abgabeistung P_{AbNenn} gemäß dem Balken 3 und der abgesenkten Leistung P_{AbReduz} gemäß dem Balken 6. Es ist weiterhin klar, daß die abgegebene Leistung auch in der Art reduziert werden kann, daß die Grenzlinie 1 bei Addition von ihr und der relevanten Verlustleistung nicht erreicht wird. Je nach Einsatz des erfindungsgemäß gestalteten Steuergerätes kann es von Vorteil sein, auch eine untere Grenze vorzugeben, bis zu der die abgegebene Leistung abgesenkt wird.

In Fig. 2 ist schematisch in einem Blockdiagramm die Erfindung anhand eines erfindungsgemäß gestalteten Regelkreises zur Veränderung der Abgabeleistung des Steuergerätes dargestellt. An einem Summationspunkt 21 wird gemäß dem Pfeil 22 die Nennleistung P_{Nenn} zugeführt sowie bei erfolgender Leistungsverminderung diese mit negativem Vorzeichen gemäß dem Pfeil 23. Dies führt im Block 24 zur Erzeugung der abgegebenen Leistung P_{ab} . Aufgrund des Wirkungsgrades η entsteht eine Verlustleistung P_{V}, welche durch den Block 25 repräsentiert ist. Daraus resultiert infolge des thermischen Widerstandes Rₜₕ des Steuergerätes dessen Eigenerwärmung, die durch den Block 26 dargestellt ist. Diese Eigenerwärmung Δθ wird entsprechend dem Pfeil 27 zusammen mit der als Störgröße auftretenden Außentemperatur des Steuergerätes gemäß dem Pfeil 28 auf einen Summationspunkt 29 aufaddiert. Die dort entstehende Temperatur ist die Innentemperatur des Steuergerätes, welche aus praktischen Gründen auch mit der maximal zulässigen Außentemperatur der Bauelemente gleichzusetzen ist. Diese Temperatur wird erfindungsgemäß mit einem Temperatursensor 30 gemessen. Aufgrund der vom Temperatursensor 30 gemessenen Temperatur wird im Block 31 die Größe ermittelt, um welche die Abgabeleistung des Steuergerätes vermindert, allgemein gesprochen verändert, werden muß, um die maximal zulässige Außentemperatur der Bauelemente nicht zu überschreiten. Diese Größe wird, wie bereits anfangs erwähnt, gemäß Pfeil 23 dem Eingangssummationspunkt 21 mit dem entsprechenden Vorzeichen zugeführt.

Der in Fig. 2 schematisch dargestellte Regelkreis sorgt aufgrund der durch den Temperatursensor 30 erfaßten Innentemperatur des Steuergerätes dafür, daß in Abhängigkeit von der festgestellten Temperatur die elektrische Abgabeleistung P_{Ab} so verändert wird, daß die Innentemperatur des Steuergerätes stabilisiert ist. In den meisten Anwendungsfällen besteht diese Stabilisierung darin, die Abgabeleistung zu vermindern, um ein Ansteigen der Innentemperatur des Gehäuses des Steuergerätes über eine maximal zulässige Temperatur zu verhindern.

In zweckmäßiger Ausgestaltung der Erfindung ist dazu der Temperatursensor 30 an einer Stelle innerhalb des Gehäuses angeordnet, an der die maximale Innentemperatur auftritt. Als maximale Innentemperatur ist diejenige anzusehen, bei der gerade noch keine Gefährdung eines Bauelementes, und zwar insbesondere desjenigen, welches gegenüber der Temperatur am empfindlichsten ist, eintritt. Dies ist oft in der Nähe des thermisch empfindlichsten Bauelementes der Fall. Diese Stelle wird vorteilhafterweise empirisch ermittelt.

Der erfindungsgemäß gestaltete Regelkreis 21 - 31 berücksichtigt die thermische Verlustleistung, welche über das Gehäuse des Steuergerätes entsteht, bei der Veränderung, insbesondere der Verminderung, der elektrischen Abgabeleistung. In vorteilhafter Weise regelt der Regelkreis die Veränderung, insbesondere die Verringerung der Abgabeleistung, nur soweit, daß der zulässige Unterschied zwischen maximal zulässiger Außentemperatur der Bauelemente und maximal zulässiger Außentemperatur des Steuergerätes optimal ausgenutzt ist. Diese Regelung ist zweckmäßig so gestaltet, daß sie kontinuierlich erfolgt.

Bei der vorstehend beschriebenen Ausführungsform ist vom Temperatursensor 30 die Innentemperatur des Gehäuses des Steuergerätes festgestellt worden, wobei davon ausgegangen ist, daß sich der Temperatursensor im Inneren des Gehäuses des Steuergerätes befindet. Es ist jedoch nicht unbedingt notwendig, daß sich der Temperatursensor im Inneren des Gehäuses befindet, um dessen Innentemperatur festzustellen bzw. allgemein eine Temperatur, welche ggf. für das Steuergerät insgesamt oder für besonders empfindliche Bauteile davon, gefährlich ist. Wenn die Verlustleistung des Steuergerätes in einem bestimmten, zu überwachenden Betriebszustand bekannt ist, beispielsweise dem Brennbetrieb einer Lampe, kann die Temperaturdifferenz der Eigenerwärmung des Steuergerätes ermittelt werden. Die Innentemperatur des Steuergerätes läßt sich nun dadurch ermitteln und auswerten, daß die Außentemperatur des Gehäuses erfaßt wird und die Temperaturdifferenz der Eigenerwärmung als Zuschlag, z.B. im Sinne eines Offset-Wertes, bei der Auswertung aufaddiert wird. Als Temperatursensor 30 sind verschiedene Möglichkeiten von Ausführungsformen gegeben, die je nach Gegebenheit vorteilhaft auswählbar und einsetzbar sind.

Das erfindungsgemäß gestaltete, thermisch geschützte Steuergerät bietet die Vorteile, daß es für einen erweiterten Temperaturbereich spezifiziert werden kann, vor thermischer Zerstörung wirksam geschützt ist, und das versorgte System funktionsfähig hält, weil es nicht abgeschaltet wird.

## Patentansprüche

1. Thermisch geschütztes, elektrische Bauelemente enthaltendes Steuergerät, insbesondere für die Steuerung von Hochdruck-Gasentladungslampen in Kraftfahrzeugscheinwerfern, wobei das Steuergerät die elektrischen Bauelemente, welche elektrische Leistung abgeben, in einem im wesentlichen geschlossenen Gehäuse enthält,
dadurch gekennzeichnet, daß
die Temperatur des Steuergeräts von einem Temperatursensor (30) erfaßt wird und daß ein Regelkreis (21 - 31) oder ein Steuerkreis vorgesehen ist, der in Abhängigkeit der festgestellten Temperatur die elektrische Abgabeleistung des Steuergerätes zur Stabilisierung der Innentemperatur im Steuergerät verändert, insbesondere vermindert, wobei der Regelkreis (21 - 31) oder der Steuerkreis die Veränderung, insbesondere die Verringerung der Abgabeleistung, nur so weit regelt, daß der zulässige Unterschied zwischen maximal zulässiger Außentemperatur (1) der Bauelemente und maximal zulässiger Außentemperatur (2) des Steuergerätes optimal ausgenutzt ist.

2. Thermisch geschütztes Steuergerät nach Anspruch 1, dadurch gekennzeichnet, daß die Temperatur innerhalb des Gehäuses von dem Temperatursensor (30) erfaßt wird.

3. Thermisch geschütztes Steuergerät nach Anspruch 1, dadurch gekennzeichnet, daß die Temperatur an dem Gehäuse außen von dem Temperatursensor (30) erfaßt wird und auf die Innentemperatur mittels eines Zuschlags bei der Auswertung schließbar ist.

4. Thermisch geschütztes Steuergerät nach Anspruch 1 - 3, dadurch gekennzeichnet, daß die Veränderung der elektrischen Abgabeleistung des Steuergerätes durch den Regelkreis (21 - 31) oder Steuerkreis kontinuierlich erfolgt.

5. Thermisch geschütztes Steuergerät nach Anspruch 1 oder 2, dadurch gekennzeichnet, daß der Temperatursensor (30) in der Nähe des thermisch empfindlichsten Bauelementes innerhalb des Steuergeräts angeordnet ist.

6. Thermisch geschütztes Steuergerät nach einem der vorigen Ansprüche, dadurch gekennzeichnet, daß der Regelkreis (21 - 31) oder der Steuerkreis die thermische Verlustleistung, die über das Gehäuse des Steuergerätes abgebbar ist, bei der Veränderung der elektrischen Abgabeleistung berücksichtigt.

## Claims

1. Thermally protected control unit containing electrical components, in particular for controlling high-pressure gas discharge lamps in motor vehicle headlights, the control unit containing the electrical components which output electrical power in an essentially enclosed housing, characterized in that the temperature of the control unit is sensed by a temperature sensor (30), and in that a closed-loop control circuit (21-31) or an open-loop control circuit is provided which changes, in particular reduces, the electrical output power of the control unit as a function of the detected temperature in order to stabilize the internal temperature in the control unit, the closed-loop control circuit (21-31) or the open-loop control circuit controlling the change in particular the reduction of the output power, only to such an extent that the permissible difference between the maximum permissible external temperature (1) of the components and the maximum permissible external temperature (2) of the control unit is utilized to an optimum degree.

2. Thermally protected control unit according to Claim 1, characterized in that the temperature within the housing is sensed by the temperature sensor (30).

3. Thermally protected control unit according to Claim 1, characterized in that the temperature on the outside of the housing is sensed by the temperature sensor (30) and it is possible to infer the internal temperature by means of a supplement during the evaluation.

4. Thermally protected control unit according to Claims 1-3, characterized in that the change in the electrical output power of the control unit is carried out continuously by means of the closed-loop control circuit (21-31) or open-loop control circuit.

5. Thermally protected control unit according to Claim 1 or 2, characterized in that the temperature sensor (30) is arranged in the vicinity of the thermally most sensitive component within the control unit.

6. Thermally protected control unit according to one of the preceding claims, characterized in that the closed-loop control circuit (21-31) or the open-loop control circuit takes into account the thermal power loss, which can be output via the housing of the control unit, in the change in the electrical output power.

## Revendications

1. Appareil de commande comportant un composant électrique à protection thermique notamment pour la commande de lampe à décharge de gaz à haute pression dans des projecteurs de véhicules automobiles, l'appareil de commande logeant les composants électriques fournissant la puissance électrique dans un boîtier essentiellement fermé,
caractérisé par
- un capteur de température (30) détectant la température de l'appareil de commande et un circuit de régulation (21-31) ou un circuit de commande qui, en fonction de la température détectée, modifie, notamment réduit, la puissance électrique fournie par l'appareil de commande pour stabiliser la température intérieure dans l'appareil de commande, et
- le circuit de régulation (21-31) ou le circuit de commande régule la variation, notamment la réduction de la puissance fournie, seulement pour utiliser de façon optimale la différence autorisée entre la température extérieure maximale autorisée (1) des composants et la température extérieure maximale autorisée (2) de l'appareil de commande.

2. Appareil de commande à protection thermique selon la revendication 1,
caractérisé en ce que
la température est détectée à l'intérieur du boîtier du capteur de température (30).

3. Appareil de commande à protection thermique selon la revendication 1,
caractérisé en ce que
la température est détectée par le capteur de température (30) à l'extérieur du boîtier et permet d'en déduire par exploitation la température intérieure au moyen d'une addition.

4. Appareil de commande à protection thermique selon les revendications 1 à 3,
caractérisé en ce que
la modification de la puissance électrique fournie par l'appareil de commande se fait de façon continue par le circuit de régulation (21-31) ou le circuit de commande.

5. Appareil de commande à protection thermique selon l'une des revendications 1 ou 2,
caractérisé en ce que
le capteur de température (30) est placé à proximité du composant le plus sensible du point de vue thermique à l'intérieur de l'appareil de commande.

6. Appareil de commande à protection thermique selon l'une des revendications précédentes,
caractérisé en ce que
le circuit de régulation (21-31) ou le circuit de commande tient compte de la puissance thermique perdue admissible par le boîtier de l'appareil de commande, lorsqu'il modifie la puissance électrique fournie.
